# EUROPÄISCHE PATENTANMELDUNG

(11) **EP 4 509 357 A1**
(43) Veröffentlichungstag der Anmeldung: **19.02.2025**
(21) Anmeldenummer: 23191996.0
(22) Anmeldetag: 17.08.2023
(51) Int. Cl.: B60P 1/64

(54) **ADAPTER, FAHRGESTELL UND FAHRZEUG**

(71) Anmelder: Schmitz Cargobull AG, 48341 Altenberge (DE)
(72) Erfinder: ZEIDLER, Andre, 99869 Drei Gleichen (DE); HERRMANN, Thomas, 99610 Sömmerda (DE); SCHMICH, Benjamin, 48324 Sendenhorst (DE)
(74) Vertreter: Liedtke & Partner Patentanwälte

(57) **Zusammenfassung**

Die Erfindung betrifft einen Adapter (4) zur Führung und/oder Befestigung eines Gegenstands (5) an einem Fahrgestell (2) eines Fahrzeugs (1) mit
- einer Fahrgestell-Befestigungsanordnung (6) zur Befestigung an dem Fahrgestell (2), wobei die Fahrgestell-Befestigungsanordnung (6) eine Anzahl von Schnellverschlüssen und/oder eine Anzahl von Schnellverschlussaufnahmen (6.1 bis 6.4) zur Befestigung an dem Fahrgestell (2) aufweist, und
- zumindest einer Führungsanordnung (8) zur Führung des Gegenstands (5) und/oder zumindest einer Gegenstands-Befestigungsanordnung (10) zur Befestigung des Gegenstands (5).

Die Erfindung betrifft weiterhin ein Fahrgestell (2) für ein Fahrzeug (1) und ein Fahrzeug (1).

## Beschreibung

Die Erfindung betrifft einen Adapter zur Führung und/oder Befestigung eines Gegenstands an einem Fahrgestell eines Fahrzeugs.

Die Erfindung betrifft weiterhin ein Fahrgestell für ein Fahrzeug.

Ferner betrifft die Erfindung ein Fahrzeug.

Aus dem Stand der Technik sind allgemein Wechselbehälter, auch als Wechselaufbau, Wechselbrücke, Wechselpritsche, Wechselaufbaubrücke, Wechselkoffer oder Wechselladebehälter bezeichnet, bekannt. Derartige Wechselbehälter sind austauschbare Ladungsträger, welche - ähnlich wie ein so genannter ISO-Container - von einem Trägerfahrzeug, beispielsweise einem Lastkraftwagen oder einem Lastkraftwagen-Anhänger, unterfahren und an diesem befestigt werden können und ebenso von diesem getrennt werden kann.

Weiterhin sind aus dem Stand der Technik Wechselladerfahrzeuge, auch als Abrollkipper oder Abrollkipperfahrzeug bezeichnet, bekannt. Derartige Wechselladerfahrzeuge sind Lastkraftwagen oder Anhänger, welche als Trägerfahrzeuge zum Transport von Abrollbehältern konzipiert sind. Dabei sind die Wechselladerfahrzeuge rückseitig mit einer Wechsellader-Einrichtung ausgestattet, mit welcher ein Abrollbehälter auf- oder abgeladen werden kann.

Unter einem Abrollbehälter, auch als Abrollcontainer bezeichnet, wird im Allgemeinen ein Behälter zum Transport von Gütern verstanden, der auf einem zu ihm passenden Wechselladerfahrzeug geladen werden kann. Der Abrollbehälter weist meist die Form eines Quaders mit rechteckiger Grundfläche auf, wobei der Abrollbehälter an einer Querseite am Boden Rollen und an einer gegenüberliegenden Querseite eine vorstehende Öse aufweist. Ein am Wechselladerfahrzeug angeordneter Greifer, auch als Hakenlift bezeichnet, hebt den Abrollbehälter an dessen Öse einseitig an, so dass bei einem Einziehen des Greifers der Abrollbehälter zuerst auf einem Untergrund des Wechselladerfahrzeugs mittels der Rollen zu dem Wechselladerfahrzeug rollt und anschließend auf Rollen oder einer Gleitstelle an einer Hinterkante des Wechselladerfahrzeugs auf dieses hinaufrollt oder gleitet. Ein Entladen geschieht gleichermaßen in umgekehrter Schrittfolge.

Aus der DE 1 920 343 A1 ist ein Sattelauflieger mit einem Wechselfahrgestell bekannt. Das Wechselfahrgestell umfasst einen Wechselrahmen mit zwei Sattelzapfen, in die wahlweise eine Zugmaschine oder ein Wechselfahrgestell eingerastet werden kann.

Weiterhin ist aus der EP 4 070 991 A1 ein Hakenliftanhänger bekannt, der für einen Hakenliftaufbau konfiguriert ist. Der Hakenliftanhänger umfasst
- einen Rahmen, der einen Längsträger umfasst, wobei der Rahmen derart angeordnet ist, dass er eine Positionierung des Hakenliftkörpers auf dem Rahmen mittels eines Hakenlifts ermöglicht,
- eine Verschiebeanordnung, die derart angeordnet ist, dass sie den auf dem Rahmen positionierten Hakenliftkörper in einer Richtung parallel zu dem Längsträger in eine Position auf dem Rahmen zum Transport oder zum Kippen des Hakenliftkörpers verschiebt, wobei die Verschiebeanordnung ein Verbindungsteil umfasst, welches derart angeordnet ist, dass es mit einem entsprechenden, am Hakenliftkörper angeordneten Verbindungselement zusammenwirkt, um den Hakenliftkörper mit der Verschiebeanordnung zu verbinden, wobei der Hakenliftkörper entlang des Rahmens zwischen verschiedenen Positionen am Rahmen in eine gewünschte Transportposition in Abhängigkeit einer zu transportierenden Last im Hakenliftkörper verschiebbar ist und wobei der Hakenliftkörper in die Position am Rahmen zum Abkippen des Hakenliftkörpers verschiebbar ist, wobei die Transportposition von der Kippposition abweicht,
- ein Positionierungsmittel, das dazu eingerichtet ist, den Hakenliftkörper in der Position zum Kippen des Hakenliftkörpers zu positionieren, wobei das Positionierungsmittel an einer Endkante des Rahmen angeordnet ist, und
- eine Kippanordnung, die so angeordnet ist, dass diese den Hakenliftkörper in die Kippposition verlagert.

Die EP 1 190 897 A2 beschreibt ein Verfahren zur Herstellung von mehreren unterschiedlichen Kippbrückenunterbauten oder Kippbrücken für Kipperfahrzeuge mit folgenden Schritten:
a) Bereitstellen von mehreren einheitlichen Kippbrückenunterbau-Basismodulen,
b) Bereitstellen von unterschiedlichen Kippbrückenseitenelementen und gegebenenfalls weiteren Kippbrücken-Bausatzelementen,
c) Auswahl der mit einem jeweiligen Kippbrückenunterbau-Basismodul zu einem Kippbrückenunterbau zu vereinigenden Kippbrückenseitenelemente und gegebenenfalls von weiteren Bausatzelementen nach Maßgabe einer gewünschten Kippbrücke,
d) Anbau der ausgewählten Seitenelemente und der gegebenenfalls weiteren Bausatzelemente an das betreffende Kippbrückenunterbau-Basismodul,
e) Wiederholung der Schritte c) und d).
Weiterhin werden eine Bausatzgruppe für eine Herstellung von Kippbrücken für Kipperfahrzeuge nach dem vorgenannten Verfahren und eine solche Kippbrücke beschrieben. Die Bausatzgruppe weist mehrere einheitlich aufgebaute Kippbrückenunterbau-Basismodule auf, die jeweils einen Kippbrückenbodenbereich aufweisen und zur Anbringung wahlweise unterschiedlicher Kippbrückenseitenelemente vorbereitet sind. Weiterhin weist die Bausatzgruppe unterschiedliche Kippbrückenseitenelemente auf, welche passend zum Zusammenbau mit dem Kippbrückenunterbau-Basismodul ausgebildet sind.

Der Erfindung liegt die Aufgabe zu Grunde, einen neuartigen Adapter zur Führung und/oder Befestigung eines Gegenstands an einem Fahrgestell, ein neuartiges Fahrgestell und ein neuartiges Fahrzeug anzugeben.

Die Aufgabe wird erfindungsgemäß gelöst durch
- einen Adapter, welcher die im Anspruch 1 angegebenen Merkmale aufweist,
- ein Fahrgestell, welches die im Anspruch 9 angegebenen Merkmale aufweist, und
- ein Fahrzeug, welches die im Anspruch 10 angegebenen Merkmale aufweist.

Vorteilhafte Ausgestaltungen der Erfindung sind Gegenstand der abhängigen Ansprüche.

Der erfindungsgemäße Adapter zur Führung und/oder Befestigung eines Gegenstands an einem Fahrgestell eines Fahrzeugs umfasst eine Fahrgestell-Befestigungsanordnung zur Befestigung an dem Fahrgestell, wobei die Fahrgestell-Befestigungsanordnung eine Anzahl von Schnellverschlüssen und/oder eine Anzahl von Schnellverschlussaufnahmen zur Befestigung an dem Fahrgestell aufweist. Weiterhin umfasst der Adapter zumindest eine Führungsanordnung zur Führung des Gegenstands und/oder zumindest eine Gegenstands-Befestigungsanordnung zur Befestigung des Gegenstands.

Der Adapter ermöglicht in besonders vorteilhafter Weise, dass das Fahrgestell in einfacher Weise für eine vorgesehene Ladeaufgabe adaptiert werden kann. Aufgrund der Schnellverschlüsse und/oder Schnellverschlussaufnahmen kann die Befestigung in einfacher, schneller und zuverlässiger Weise, in einer möglichen Ausgestaltung auch werkzeuglos, durchgeführt werden.

Gemäß einer möglichen Ausgestaltung des Adapters umfasst die Führungsanordnung zumindest zwei in Adapterlängsrichtung verlaufende Rollbahnen zur Führung und Aufnahme von an einem als Abrollbehälter, auch als Abrollcontainer bezeichnet, oder Abrollpritsche ausgebildeten Gegenstand angeordneten Rollen. Somit ermöglicht der Adapter, dass ein Abrollbehälter oder eine Abrollpritsche ohne eine Hubvorrichtung von einem Fahrgestell, beispielsweise einem Fahrgestell eines Lastkraftwagens, auf ein anderes Fahrgestell, beispielsweise ein Fahrgestell eines Anhängers, umgeladen werden kann. Dies kann beispielsweise mittels eines so genannten Hakenlifts des Lastkraftwagens erfolgen, wobei Rollen des Abrollbehälters bzw. der Abrollpritsche auf die Rollbahnen des Adapters auf dem Anhänger bewegt werden und anschließend der Abrollbehälter bzw. die Abrollpritsche auf dem Anhänger in seine vorgesehene Endposition bewegt wird.

Gemäß einer weiteren möglichen Ausgestaltung des Adapters umfasst die Gegenstands-Befestigungsanordnung in Adapterlängsrichtung am Ende der Rollbahnen angeordnete Rollen-Aufnahmen zur zumindest teilweisen Aufnahme der Rollen. Dies ermöglicht eine einfache und sichere Fixierung des Abrollbehälters bzw. der Abrollpritsche.

Gemäß einer weiteren möglichen Ausgestaltung des Adapters weist dieser mehrere an Längsseiten angeordnete ausklappbare und/oder ausfahrbare und einklappbare und/oder einfahrbare Stützelemente zu einer Beabstandung des Adapters von einem Untergrund in der Art, dass der Adapter von dem Fahrgestell unterfahrbar ist, auf. Durch diese, einem so genannten Wechselaufbau bzw. einer so genannten Wechselbrücke ähnelnden Aufbau kann der Adapter ohne Hebezeuge, wie beispielsweise Kräne, an dem Fahrgestell befestigt werden. Die Befestigung ist somit in einfacher, schneller und zuverlässiger Weise durch eine Person, beispielsweise einen Fahrer eines Lastkraftwagens, durchführbar.

Gemäß einer weiteren möglichen Ausgestaltung des Adapters sind die Stützelemente jeweils mit einem hydraulischen und/oder pneumatischen und/oder elektrischen Antrieb zum Ausklappen und/oder Ausfahren und Einklappen und/oder Einfahren gekoppelt. Hierdurch kann ein manueller Aufwand zum Ausklappen und/oder Ausfahren sowie zum Einklappen und/oder Einfahren signifikant verringert werden.

Gemäß einer weiteren möglichen Ausgestaltung des Adapters sind die Schnellverschlussaufnahmen der Fahrgestell-Befestigungsanordnung zu einer kraft- und/oder formschlüssigen Verbindung mit als Drehzapfen-Verriegelungen ausgebildeten Schnellverschlüssen des Fahrgestells, beispielsweise so genannten Twistlocks, ausgebildet. Dies ermöglicht, dass der Adapter in einfacher Weise an dem Fahrgestell befestigt werden kann. Beispielsweise kann das Fahrgestell zu einer Aufnahme von so genannten Iso-Containern vorgesehen sein und ist mittels des Adapters in einfacher Weise zur Aufnahme und Führung eines Abrollbehälters oder einer Abrollpritsche adaptierbar. Beispielsweise werden die Drehzapfen-Verriegelungen in die Schnellverschlussaufnahmen eingeführt bzw. der Adapter auf fest am Fahrzeug befindliche Drehzapfen-Verriegelungen aufgesetzt. Anschließend wird ein Teil der jeweiligen Drehzapfen-Verriegelung um einen vorgegebenen Winkel, beispielsweise um 90 °, verdreht und dadurch eine formschlüssige Verbindung zwischen den Drehzapfen-Verriegelungen und den Schnellverschlussaufnahmen erzeugt.

Gemäß einer weiteren möglichen Ausgestaltung des Adapters weisen die Schnellverschlussaufnahmen der Fahrgestell-Befestigungsanordnung eine Befestigungsstruktur zu einer kraftschlüssigen Fixierung an einer Verriegelungsvorrichtung, beispielsweise einer hydraulischen Containerverriegelung, des Fahrgestells auf. Dies ermöglicht beispielsweise eine hydraulisch erzeugte Klemmung des Adapters.

Gemäß einer weiteren möglichen Ausgestaltung des Adapters weist dieser eine Hebezeug-Befestigungsanordnung zur Befestigung eines Hebezeugs, beispielsweise des Hakenlifts, auf. Die Hebezeug-Befestigungsanordnung ist zum Beispiel in einfacher Weise als Öse ausgebildet und ermöglicht in einfacher Weise eine Befestigung des Hakenlifts.

Das erfindungsgemäße Fahrgestell für ein Fahrzeug weist einen vorgenannten Adapter und eine Befestigungsanordnung auf, an welcher der Adapter mittels seiner Fahrgestell-Befestigungsanordnung befestigt ist. Mittels des Adapters ist das Fahrgestell in einfacher Weise für eine vorgesehene Ladeaufgabe adaptiert. Aufgrund der Schnellverschlüsse und/oder Schnellverschlussaufnahmen kann die Befestigung des Adapters am Fahrgestell in einfacher, schneller und zuverlässiger Weise, in einer möglichen Ausgestaltung auch werkzeuglos, durchgeführt werden. Das erfindungsgemäße Fahrzeug weist ein vorgenanntes Fahrgestell auf. Mittels des Adapters ist das Fahrzeug in einfacher Weise für eine vorgesehene Ladeaufgabe adaptiert.

Gemäß einer möglichen Ausgestaltung des Fahrzeugs ist dieses als Anhänger ausgebildet. Dies ermöglicht beispielsweise dann, wenn die Führungsanordnung des Adapters zumindest zwei in Adapterlängsrichtung verlaufende Rollbahnen zur Führung und Aufnahme von an einem als Abrollbehälter oder Abrollpritsche ausgebildeten Gegenstand angeordneten Rollen aufweist, einen Abrollbehälter bzw. eine Abrollpritsche ohne eine Hubvorrichtung, beispielsweise ausschließlich mittels eines Hakenlifts, von einem Fahrgestell eines Lastkraftwagens auf das Fahrgestell des Anhängers umzuladen.

Ausführungsbeispiele der Erfindung werden im Folgenden anhand von Zeichnungen näher erläutert.

Darin zeigen:
- Figur 1: schematisch eine perspektivische Ansicht eines Fahrzeugs,
- Figur 2: schematisch eine perspektivische Ansicht eines Adapters,
- Figur 3: schematisch eine perspektivische Ansicht des Fahrzeugs gemäß Figur 1 mit einem daran befestigten Adapter gemäß Figur 2,
- Figur 4: schematisch eine perspektivische Ansicht des Fahrzeugs gemäß Figur 3 mit einem an dem Adapter befestigten Gegenstand und
- Figur 5: schematisch eine Seitenansicht des Fahrzeugs gemäß Figur 4 mit dem an dem Adapter befestigten Gegenstand.

Einander entsprechende Teile sind in allen Figuren mit den gleichen Bezugszeichen versehen.

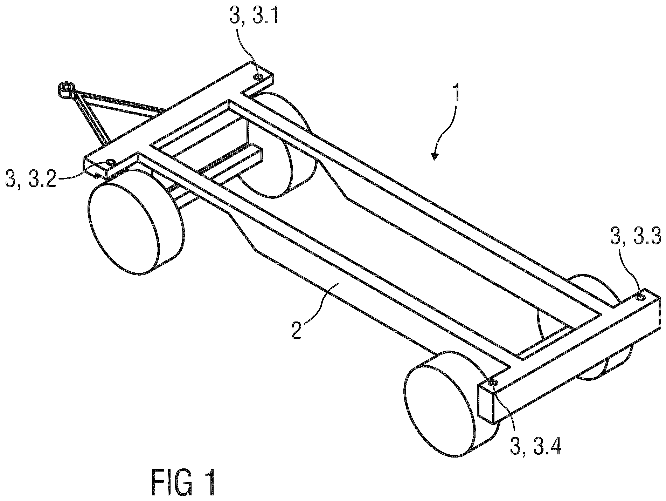

In **Figur 1** ist eine perspektivische Ansicht eines möglichen Ausführungsbeispiels eines Fahrzeugs 1 mit einem Fahrgestell 2 dargestellt, wobei das Fahrzeug 1 ein Anhänger für einen Lastkraftwagen ist.

Das Fahrgestell 2 ist beispielsweise zu einer Aufnahme eines so genannten Iso-Containers oder eines so genannten Wechselbehälters ausgebildet und weist hierzu eine Befestigungsanordnung 3 mit mehreren Schnellverschlüssen 3.1 bis 3.4, beispielsweise Drehzapfen-Verriegelungen, so genannten Twistlocks, auf.

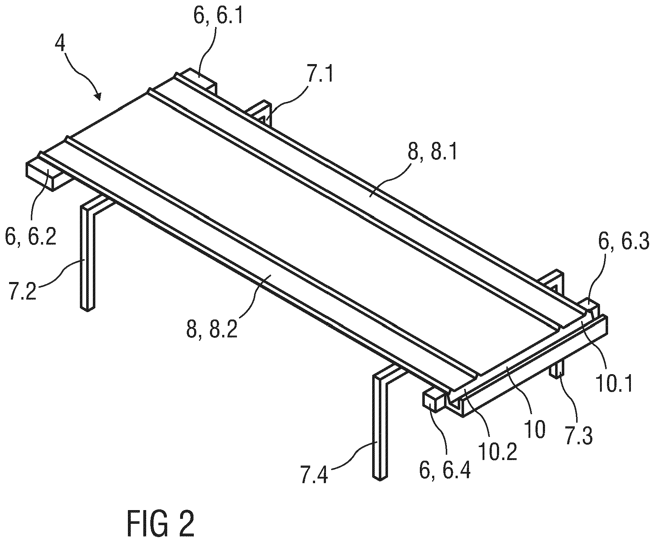

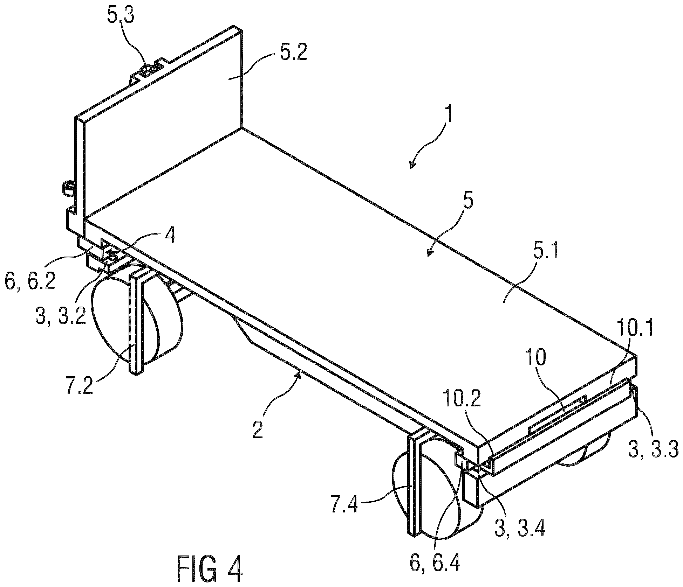

**Figur 2** zeigt eine perspektivische Ansicht eines möglichen Ausführungsbeispiels eines Adapters 4. Der Adapter 4 ist zur Führung und Befestigung eines in Figur 4 näher dargestellten Gegenstands 5 an dem Fahrgestell 2 ausgebildet.

Der Adapter 4 umfasst eine Fahrgestell-Befestigungsanordnung 6 zur Befestigung an dem Fahrgestell 2, wobei die Fahrgestell-Befestigungsanordnung 6 eine Mehrzahl von mit den Schnellverschlüssen 3.1 bis 3.4 korrespondierenden bzw. zu diesen komplementären Schnellverschlussaufnahmen 6.1 bis 6.4 aufweist. Dabei sind die Schnellverschlüsse 3.1 bis 3.4 und die Schnellverschlussaufnahmen 6.1 bis 6.4 insbesondere derart ausgebildet, dass die Schnellverschlüsse 3.1 bis 3.4 in die Schnellverschlussaufnahmen 6.1 bis 6.4 eingeführt bzw. der Adapter 4 auf fest am Fahrzeug 1 befindliche Schnellverschlüsse 3.1 bis 3.4 aufgesetzt wird. Anschließend wird ein Teil der jeweiligen Schnellverschlüsse 3.1 bis 3.4 um einen vorgegebenen Winkel, beispielsweise um 90 °, verdreht und dadurch eine formschlüssige Verbindung zwischen den Schnellverschlüssen 3.1 bis 3.4 und den Schnellverschlussaufnahmen 6.1 bis 6.4 erzeugt.

Im dargestellten Ausführungsbeispiel umfasst der Adapter 4 weiterhin mehrere an Längsseiten angeordnete ausklappbare und/oder ausfahrbare und einklappbare und/oder einfahrbare Stützelemente 7.1 bis 7.4 zu einer Beabstandung des Adapters 4 von einem Untergrund in der Art, dass der Adapter 4 von dem Fahrgestell 2 unterfahrbar ist. Hieraus resultiert, dass der Adapter 4 in der Art eines so genannten Wechselaufbaus bzw. einer so genannten Wechselbrücke ausgebildet ist und ohne Hebezeuge, wie beispielsweise Kräne, an dem Fahrgestell 2 befestigt werden kann. Ein Antrieb der Stützelemente 7.1 bis 7.4 kann dabei hydraulisch und/oder pneumatisch und/oder elektrisch aber auch manuell erfolgen.

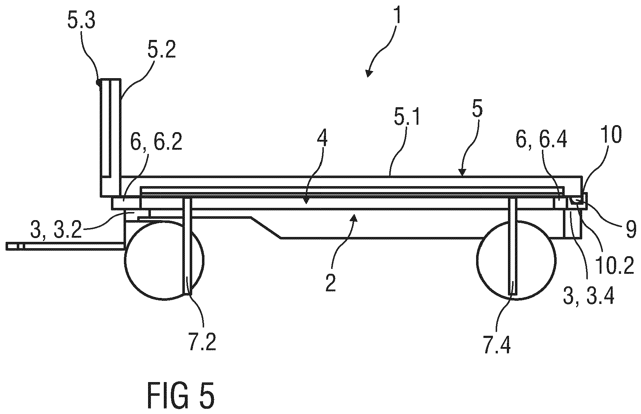

Weiterhin umfasst der Adapter 4 im dargestellten Ausführungsbeispiel eine Führungsanordnung 8 zur Führung des Gegenstands 5. Dabei umfasst die Führungsanordnung 8 zwei in Adapterlängsrichtung verlaufende Rollbahnen 8.1, 8.2 zur Führung und Aufnahme von an einem als Abrollbehälter oder Abrollpritsche ausgebildeten Gegenstand 5 angeordneten und in Figur 5 näher dargestellten Rollen 9.

Weiterhin umfasst der Adapter 4 im dargestellten Ausführungsbeispiel eine Gegenstands-Befestigungsanordnung 10 zur Befestigung des Gegenstands 5. Dabei umfasst die Gegenstands-Befestigungsanordnung 10 in Adapterlängsrichtung am Ende der Rollbahnen 8.1, 8.2 angeordnete Rollen-Aufnahmen 10.1, 10.2 zur zumindest teilweisen Aufnahme der Rollen 9. Die Rollen-Aufnahmen 10.1, 10.2 sind beispielsweise Bestandteil einer durchgängigen rinnenförmigen Struktur. In nicht näher dargestellten Ausführungsbeispielen weist die Gegenstands-Befestigungsanordnung 10 weitere Befestigungsmittel zu einer kraft- und/oder formschlüssigen Befestigung des Gegenstands 5 an dem Adapter 4 auf.

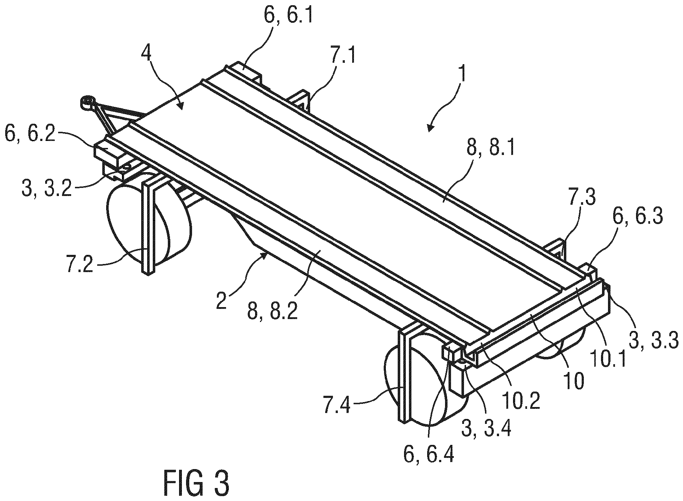

In **Figur 3** ist eine perspektivische Ansicht des Fahrzeugs 1 gemäß Figur 1 mit dem daran befestigten Adapter 4 gemäß Figur 2 dargestellt. Nach einer Befestigung des Adapters 4 an dem Fahrgestell 2 werden die Stützelemente 7.1 bis 7.4 abweichend von der Darstellung eingeklappt und/oder eingefahren.

**Figur 4** zeigt eine perspektivische Ansicht des Fahrzeugs 1 gemäß Figur 3 mit einem an dem Adapter 4 befestigten Gegenstand 5. In **Figur 5** ist eine Seitenansicht des Fahrzeugs 1 gemäß Figur 4 dargestellt.

Der Gegenstand 5 ist vorliegend eine so genannte Abrollpritsche, kann aber alternativ auch ein Abrollbehälter oder ein anderer abrollfähiger Gegenstand 5 sein.

Die Abrollpritsche weist eine rechteckige Grundfläche 5.1 und eine im Wesentlichen senkrecht von dieser abragende Stirnwand 5.2 auf, wobei die Abrollpritsche an einer der Stirnwand 5.2 abgewandten Querseite am Boden Rollen 9 aufweist. An der gegenüberliegenden Querseite an der Stirnwand 5.2 ist eine vorstehende Öse 5.3 angeordnet.

Um die Abrollpritsche beispielsweise von einem Fahrgestell eines nicht näher dargestellten Lastkraftwagens, beispielsweise eines mit dem als Anhänger ausgebildeten Fahrzeug 1 gekoppelten und als Wechselladerfahrzeug ausgebildeten Zugfahrzeugs, auf dem Fahrzeug 1 zu positionieren, werden das Zugfahrzeug und das Fahrzeug 1 zunächst derart positioniert, dass deren Längsachse zumindest nahezu versatzlos in die gleiche Richtung verlaufen.

Anschließend wird beispielsweise mittels eines an dem Zugfahrzeug angeordneten und die Öse 5.3 greifenden Hakenlifts die Abrollpritsche von dem Zugfahrzeug derart nach hinten bewegt, dass die Rollen 9 auf die Rollbahnen 8.1, 8.2 geführt werden. Dann wird die Abrollpritsche auf den Rollbahnen 8.1, 8.2 so lange nach hinten verschoben, bis die Rollen 9 in die Rollen-Aufnahmen 10.1, 10.2 gelangen. Darauffolgend wird die Abrollpritsche an dem Adapter 4 und/oder dem Fahrgestell 2 befestigt.

### BEZUGSZEICHENLISTE

- 1: Fahrzeug
- 2: Fahrgestell
- 3: Befestigungsanordnung
- 3.1 bis 3.4: Schnellverschluss
- 4: Adapter
- 5: Gegenstand
- 5.1: Grundfläche
- 5.2: Stirnwand
- 5.3: Öse
- 6: Fahrgestell-Befestigungsanordnung
- 6.1 bis 6.4: Schnellverschlussaufnahme
- 7.1 bis 7.4: Stützelement
- 8: Führungsanordnung
- 8.1, 8.2: Rollbahn
- 9: Rolle
- 10: Gegenstands-Befestigungsanordnung
- 10.1, 10.2: Rollen-Aufnahme

## Patentansprüche

1. Adapter (4) zur Führung und/oder Befestigung eines Gegenstands (5) an einem Fahrgestell (2) eines Fahrzeugs (1) mit
- einer Fahrgestell-Befestigungsanordnung (6) zur Befestigung an dem Fahrgestell (2), wobei die Fahrgestell-Befestigungsanordnung (6) eine Anzahl von Schnellverschlüssen und/oder eine Anzahl von Schnellverschlussaufnahmen (6.1 bis 6.4) zur Befestigung an dem Fahrgestell (2) aufweist, und
- zumindest einer Führungsanordnung (8) zur Führung des Gegenstands (5) und/oder zumindest einer Gegenstands-Befestigungsanordnung (10) zur Befestigung des Gegenstands (5).

2. Adapter (4) nach Anspruch 1, wobei die Führungsanordnung (8) zumindest zwei in Adapterlängsrichtung verlaufende Rollbahnen (8.1, 8.2) zur Führung und Aufnahme von an einem als Abrollbehälter oder Abrollpritsche ausgebildeten Gegenstand (5) angeordneten Rollen (9) umfasst.

3. Adapter (4) nach Anspruch 2, wobei die Gegenstands-Befestigungsanordnung (10) in Adapterlängsrichtung am Ende der Rollbahnen (8.1, 8.2) angeordnete Rollen-Aufnahmen (10.1, 10.2) zur zumindest teilweisen Aufnahme der Rollen (9) umfasst.

4. Adapter (4) nach einem der vorhergehenden Ansprüche, aufweisend mehrere an Längsseiten angeordnete ausklappbare und/oder ausfahrbare und einklappbare und/oder einfahrbare Stützelemente (7.1 bis 7.4) zu einer Beabstandung des Adapters (4) von einem Untergrund in der Art, dass der Adapter (4) von dem Fahrgestell (2) unterfahrbar ist.

5. Adapter (4) nach Anspruch 4, wobei die Stützelemente (7.1 bis 7.4) jeweils mit einem hydraulischen und/oder pneumatischen und/oder elektrischen Antrieb zum Ausklappen und/oder Ausfahren und Einklappen und/oder Einfahren gekoppelt sind.

6. Adapter (4) nach einem der vorhergehenden Ansprüche, wobei die Schnellverschlussaufnahmen (6.1 bis 6.4) der Fahrgestell-Befestigungsanordnung (6) zu einer kraft- und/oder formschlüssigen Verbindung mit als Drehzapfen-Verriegelungen ausgebildeten
Schnellverschlüssen (3.1 bis 3.4) des Fahrgestells (2) ausgebildet sind.

7. Adapter (4) nach einem der vorhergehenden Ansprüche, wobei die Schnellverschlussaufnahmen (6.1 bis 6.4) der Fahrgestell-Befestigungsanordnung (6) eine Befestigungsstruktur zu einer kraftschlüssigen Fixierung an einer Verriegelungsvorrichtung des Fahrgestells (2) aufweisen.

8. Adapter (4) nach einem der vorhergehenden Ansprüche, aufweisend eine Hebezeug-Befestigungsanordnung zur Befestigung eines Hebezeugs.

9. Fahrgestell (2) für ein Fahrzeug (1), aufweisend
- einen Adapter (4) nach einem der vorhergehenden Ansprüche und
- eine Befestigungsanordnung (3), an welcher der Adapter (4) mittels seiner Fahrgestell-Befestigungsanordnung (6) befestigt ist.

10. Fahrzeug (1), aufweisend ein Fahrgestell (2) nach Anspruch 9.

11. Fahrzeug (1) nach Anspruch 10, ausgebildet als Anhänger.
